# EUROPEAN PATENT SPECIFICATION

(11) **EP 0 425 008 B1**
(45) Date of publication and mention of the grant of the patent: **28.12.1994**
(21) Application number: 90202696.2
(22) Date of filing: 11.10.1990
(51) Int. Cl.: B65D 33/36, B65D 75/58, B65D 83/08, B65D 85/16

(54) **Package consisting of a paper bag compactly packing compressed flexible articles**
Verpackung, bestehend aus einer flexible, zusammengedrückte Gegenstände dicht verpackenden Papiertüte
Emballage constitué d'un sac en papier emballant de manière compacte des articles comprimés

(30) Priority: 23.10.1989 GB 8923835
(43) Date of publication of application: 02.05.1991
(73) Proprietor: THE PROCTER & GAMBLE COMPANY, Cincinnati, Ohio 45202 (US)
(72) Inventor: Cornelissen, Roger Emil, E-08190 Barcelona (ES); Haubach, Claus Carl Ferdinand, D-67061 Ludwigshafen (DE); Ramos Blanco, Agustin, D-65760 Eschborn (DE)
(74) Representative: Canonici, Jean-Jacques

(56) References cited:
- EP-A- 0 258 573
- EP-A- 0 349 050
- DE-U- 8 621 549
- US-A- 3 227 359
- US-A- 4 242 854

## Description

### TECHNICAL FIELD

This invention relates to a package consisting of a paper bag compactly packing compressed flexible articles. More particularly it relates to a unique assembly of certain qualities of paper in combination with specific design structures for composing the paper bag for compact packing of the compressed flexible articles and removing these packed articles, and the condition into which the flexible articles are brought at the time they are packed.

Flexible articles, like for example disposable diapers, are mostly packed either in cardboard boxes or in flexible bags made of plastic film. Cardboard is heavy, takes more space than plastic, gives less flexibility for storing since it is rigid and, in use, continues to take up the same amount of space, even when practically empty. On the other hand, it has the advantage of being nature-renewable and biodegradable or recyclable since paper recycling facilities are already in place. Plastic bags, which are lighter and allow more flexibility, are not biodegradable and, although techniques are being developed to recycle plastic, no recycling facilities are in place yet.

In order to decrease the quantity of packaging material needed for packing flexible articles, technologies have been developed to compress such flexible articles before packing them, which have led to a reduction of cost of such packing material and to a reduction of empty packing material to dispose of, which is an environmental benefit. Equipment to compress such flexible articles is readily available on the market.

US-A-4 242 854, published on 6th January, 1981, discloses a package for compressed stacks of diapers, the packaging material being plastic, and the closure being of the drawstring type.

EP-A-349 050, published on 3rd January 1990, describes an opening device for flexible bags filled with such compressed flexible articles. Flexible bags filled with compressed flexible articles according to EP-A 349 050 are found on the market since November 1988. The executions available are made of polyethylene, which is a plastic material which is not easily biodegradable and for which recycling facilities are not yet in place, although they are being developed. There is consequently a need for finding a way to pack flexible articles, which have been compressed, in a more environmentally friendly outer container.

US-A-3 227 359, published on 4th January, 1966, describes a paper bag used for packing compressed articles such as surgical sponges. The bag is opened by tearing a part of the end panel, however there is no suggestion that a reinforcement sheet could be added to the opening means in order to allow highly compressed articles to be packaged. The preamble of claim 1 is based on this prior art.

In light of the above, a principal object of the present invention is to provide a package consisting of a paper bag with compactly packed compressed flexible articles.

It is another object of the invention to provide such a paper bag for compact packing of flexible articles which can be easily filled and subsequently sealed and which is then shape-retaining.

It is still another object of the invention to provide a paper bag for compact packing of flexible articles which can easily be opened to the extent necessary for getting access to the compressed flexible articles it contains, without the risk of destroying the bag to such an extent that it no longer protects the unused compressed flexible articles it still contains.

It is still a further object of the invention to provide a paper bag for compact packing of flexible articles which is more easily biodegradable or recyclable.

It is an additional object of the invention to provide a paper bag for compact packing of flexible articles which not only has high environmental qualities and sufficient strength, but has also good printing qualities on its external surface so that an attractively looking package can be provided.

In order to accomplish the above stated objectives, the present invention provides a paper bag according to claim 1.

It has been found that, in order to be able to satisfactorily use biodegradable and/or easily recyclable paper material for making bags for flexible articles, it is important that the flexible articles and the paper bag form a compact, solid unit. Indeed, as is well known, paper, which is not maintained in stretched form by a supporting element, will easily get wrinkled and subsequently torn or punctured. This is also the case when flexible articles, like diapers, are packed in the bag. By compressing such flexible articles and dimensioning a paper bag to exactly the format of the compressed flexible articles to be packed, the interaction between these compressed flexible articles and the paper bag results in a strong, resistant and, as long as it is unopened, shape-retaining package.

The invention has been tested with various qualities of paper, consisting of one or more layers, to make the paper bag. It has been found that papers or combined layers of paper, having a total basis weight in the range of from 70 to 125 grams per square meter, are suitable. However, the qualities of paper that present the most advantages from the environmental point of view for making the bag which is an element of the present invention, are unbleached virgin papers or unbleached recycled papers. In order to be able to present an attractive package made with unbleached papers, it is however necessary to white-coat the outside of these papers to allow good quality printing. Experience has shown that high opacity coating of unbleached paper is problematic, since the paper has either to be made of light-coloured fibers like unbleached mechanical wood pulp and/or a high grammage coating of the paper layer is required. Either of these solutions is controversial since they detract from the good mechanical properties required for packing compressed articles in a paper bag.

For the above reasons, the best results are found with a two-layer paper consisting of one layer of brown, unbleached kraft pulp/paper with good mechanical properties and one layer of light brown unbleached mechanical wood pulp/paper. As will be known to the man of the art, such two-layer paper can be made either with a two or more screen papermaking machine whereby, in the end product, the kraft pulp layer will be at the inside of the bag and the mechanical wood pulp layer will be at the outside of the bag. Another solution is to have both layers made separately and subsequently glued together to form a laminate. It has been found that the glue laminated paper presents the best technical properties required for packing of compressed disposables, while still retaining the environmentally desirable properties.

In order to obtain a good printing surface for the final bag if this is desired, the layer of light brown unbleached mechanical wood pulp/paper can be low grammage white coated. Another back-up option would be to use a bleached paper quality with optimized environmental properties like (partially with oxygen) bleached paper. If such a paper is used, no white coating of the outer surface is needed to achieve a good quality basis for printing.

The bags made of paper can be filled with the compressed articles on conventional equipment. In a preferred embodiment, the flexible articles packed in the paper bags according to the invention are compressed to about 60 to 75% of their initial volume when they are introduced in the paper bag, where they return to about 40 to 55% compression volume at the end of the packing and sealing operation. The invention will however still work with lower ranges of compression.

While the specification concludes with claims particularly pointing out and distinctly claiming the present invention, it is believed that the same will be better understood from the following description taken in conjunction with the accompanying drawings:
Figure 1 is a perspective view of a preferred embodiment of the package consisting of a side gussetted paper bag compactly packing compressed flexible articles.
Figure 2 is a flat blank of the one or two-layer paper before it is formed into a bag.
Figure 3 is a fragmentary perspective view of the preferred embodiment of Figures 1 and 2, but with the opening device partially torn upwards so that the first compressed articles are being released.
Figure 4 is a fragmentary perspective view of the package according to the invention, showing a preferred embodiment of an opening device.
Figure 5 shows a fragmentary perspective view of the package according to the invention, showing another preferred opening device.
Figure 6 is a perspective view of a preferred embodiment of the package consisting of a top gussetted paper bag compactly packing compressed flexible articles.

Referring now to the drawings in detail, wherein like reference numbers indicate the same elements throughout the use, there is illustrated a preferred embodiment of a package consisting of a paper bag compactly packing compressed flexible articles according to the present invention.

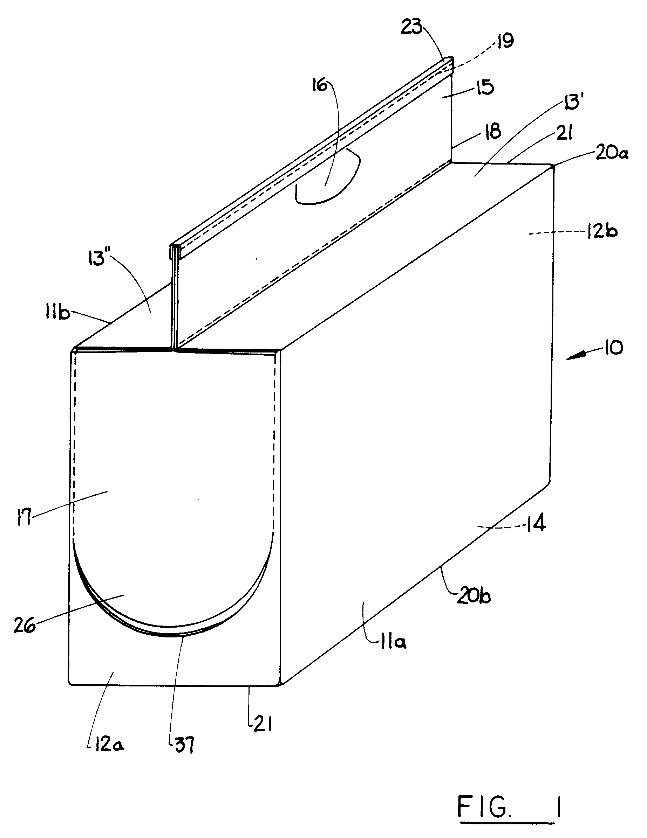

As can be seen from Figure 1, package (10) has a generally parallepipedic shape and represents a filled side gussetted paper bag consisting of front panels (11a and 11b), side panels (12a and 12b), top panel (13) and bottom panel (14). Top panel (13) consists of two sections (13′ and 13˝) which are joined together at line (18) and form extension (15) in which carrying device (16) is provided. Opening device (17) is provided in side panel (12a).

Such a side gussetted paper bag is formed in a conventional way by folding paper from a roll into a side gussetted tube glued at the side seam and delivered as such or then cutting individual bags from the tube and group them into wickets. The top of the bag is closed before filling by sewing or thermosealing along line (18), thereby forming extension (15) which finishes in another line of sewing or thermosealing (19). Horizontal scorelines (20a and 20b) have been provided in the locations which will delimit the upper and lower edge of the stack of compressed articles to be inserted in the bag whereas diagonal scorelines (21) delimit the upper or both side edges of the stack of compressed articles to be packed. The scorelines provided in the upper part of the paper bag facilitate erecting the empty bag into a parallepipedic shape for easy insertion through the bottom of the compressed articles to be packed, whereas the scorelines provided in the lower part of the paper bag facilitate the folding of the paper bag to form the bottom which is to be sealed or folded and glued after filling.

Once the bags have been filled with the compressed flexible articles, they are thermosealed or folded and glued on bottom panel (14) using a conventional means. It is however especially advantageous to close them with the help of a thermoactivated glue applied on the inside of the bag bottom during the paper printing in the bag forming process since this closing method allows the use of existing sealing equipments for polybags without the need for a plastic laminate.

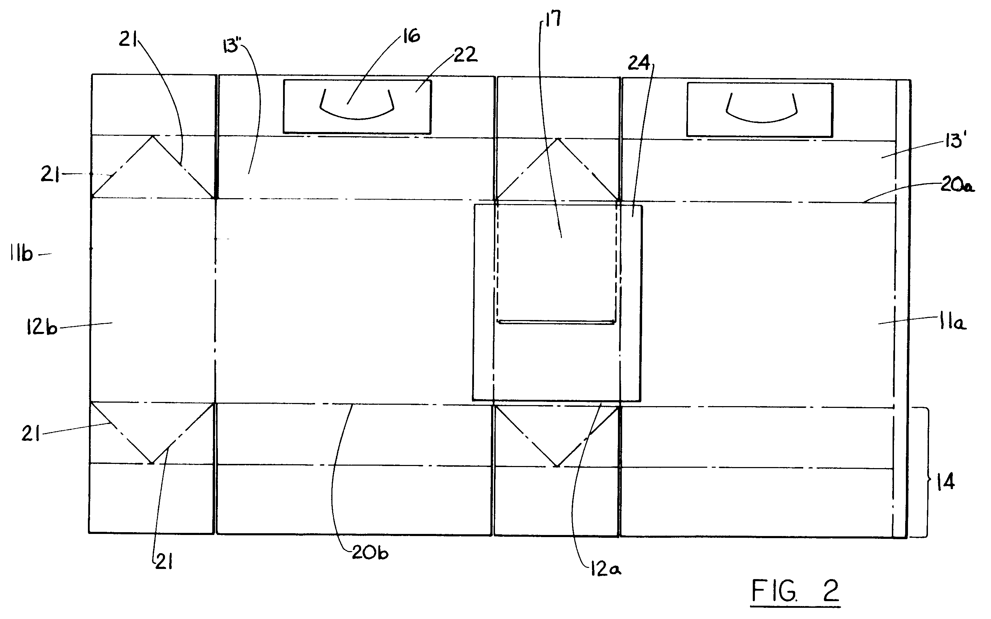

The carrying device (16), which is provided in the extension (15), consists of a conventional grip-hole cut-out. This grip-hole is reinforced by an intermediate layer of biodegradable material like unbleached paper, board, or paper with cotton or other natural string reinforcement (22), as can be seen from Figure 2.

At the time the upper extension (15) consisting of extensions of top panel sections (13′ and 13˝) is sewn together along its free edge, a U-shaped protective member (23) is slid over the free top edges of the extension (15) and is sewn in the same sewing operation (19). This U-shaped protective member is also made of biodegradable material, like paper.

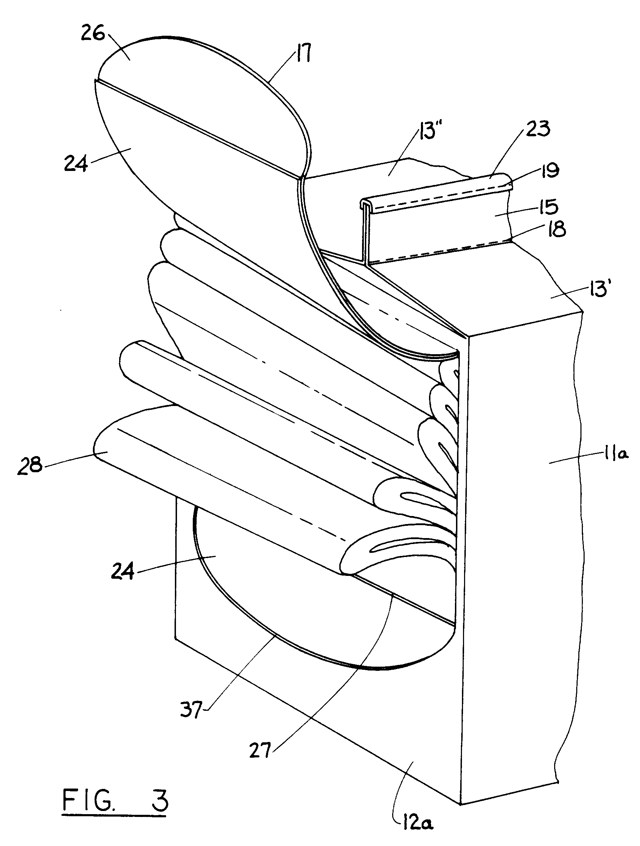

The opening device which is shown in Figure 1 is positioned in side gusset/side panel (12a). It is positioned perpendicular to the compression direction of the flexible articles packed in the paper bag so that, after opening of the device, the compressed articles (28) are released and can be taken out one after the other without unnecessary tearing of the paper bag, which continues to protect the unused articles it still contains, as can be seen from Figure 3.

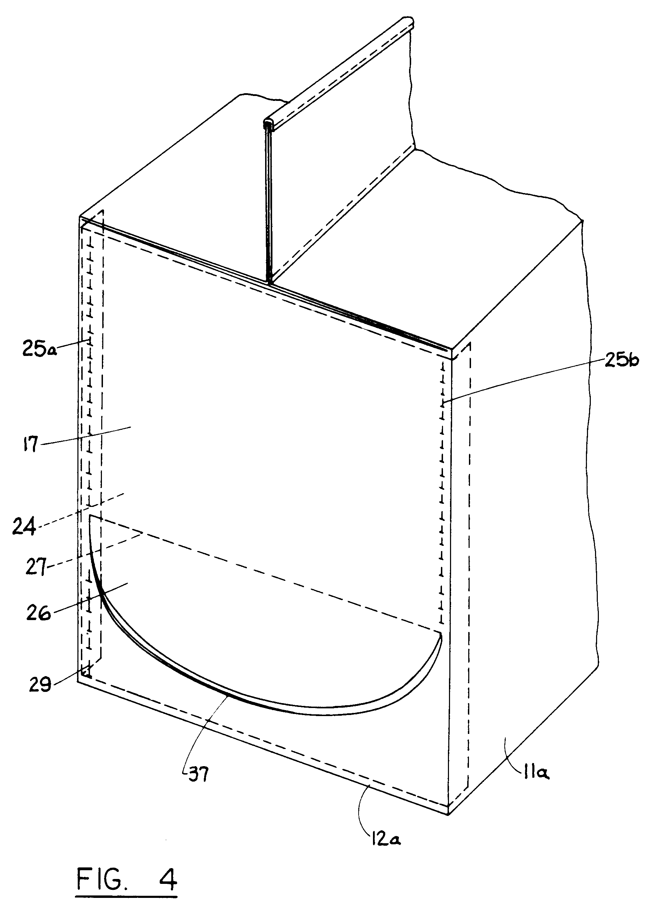

The preferred opening device (17) shown in Figures 2 and 4 consists of an internal reinforcement sheet (24) made of a suitable biodegradable and/or recyclable material like paper, light board, cotton cloth, etc.; vertical perforations (25a, b) and a tearing flap (26). The reinforcement sheet (24) is glued to the inside of the bag at least on the side panel (12a) in which the opening device (17) is foreseen, but can be of a sufficient width to overlap the folds between side panel (12a) and front panel (11a and 11b). A horizontal slit (27) is provided in reinforcement sheet (24) between and at the lower end of the vertical perforations (25). A shaped cutting (37) is provided in the bag in order to generate a loose flap (26). The loose flap is glued 1 to 5 mm below the slit in order to ensure that the bag is perfectly closed. No glue is applied on the reinforcement sheet (24) in the area coinciding with the loose flap cut-out (26) foreseen in the paper bag.

The size and shape of the opening device (17) is in function of the compression ratio of the flexible articles packed in the paper bag. For highly compressed articles, the size of the opening can be increased by extending perforations (25a or 25b) somewhat (29). These additional perforations (29) will tear when the bag is opened as described above and upon removal of the first highly compressed article, thereby leaving a triangular area at the bottom of side panel (12a) which will prevent the following articles from falling outside the paper bag.

By glueing the reinforcement sheet (24) to the surface of side panel (12a) facing inwardly, three major advantages are obtained. First, the bridges of the perforations (25a, b, 29) are reinforced so that they do not burst open under the pressure of the compressed flexible articles contained in the paper bag, especially when the filled package undergoes careless or severe handling, whereas these bridges can still be smoothly and easily opened along the perforation at the time this is desired. Furthermore, once the perforations have been broken open, the part of the reinforcement sheet (24) remaining glued to the part of the side panel delimiting the opening after opening device (17) is partially torn out, is providing a reinforcement along the edge of this opening, the edges of which will not tear or break when the compressed articles are removed from the bag. Additionally, it may be advantageous to coat the side of the reinforcement sheet (24) facing the packed flexible articles with a recyclable compatible coating in order to reduce friction between the flexible articles and the paper bag when removing the first few articles from the bag.

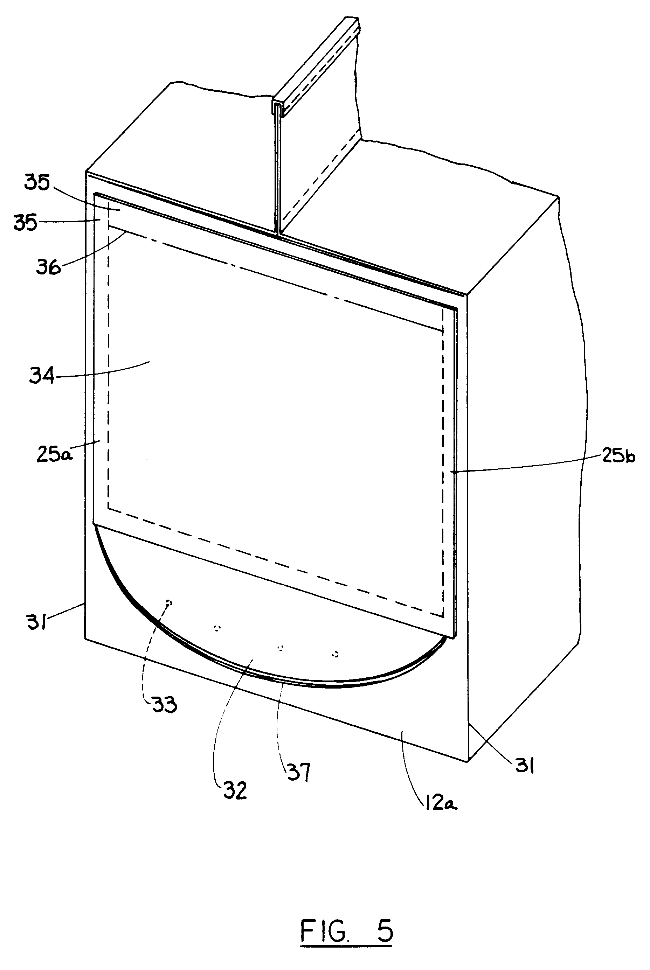

The opening device shown in Figure 5 works along the same principle as the one described in Figure 4 but provides a protective sheet (35) made of a suitable biodegradable and/or recyclable material like paper, light board, cotton cloth, etc. on the outside of side panel (12a) over vertical perforations (25a and b) and horizontal slit (30). This protective sheet is attached with a releasable glue in the area along the vertical sides of perforations and between these perforations and the vertical edges (31) of the side panel (12a), which area has been coated with varnish, whereas it is permanently glued to the unvarished area (34) located between said perforations. A loose extension flap (32) hinges at the bottom end of the protective sheet and is secured with hot melt dots (33) to the side panel (12a), to avoid accidental opening. Hinge (36) defines the upper part of the protective sheet. It can be replaced by a perforation, which would mean that, upon opening of the bag, the entire opening device would be removed, provided that the protective sheet is attached with a releasable glue also above said perforation. At the time the package is to be opened, it will be sufficient to detach the hot melt dots of the loose flap (32) and, with an upward pull, break the perforations defining area (34).

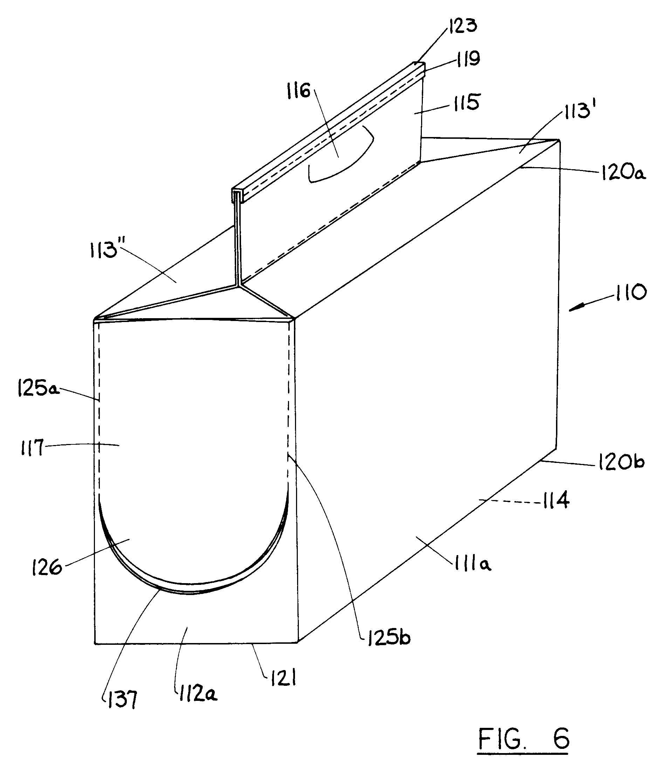

Although the present invention has been described in conjunction with a side gussetted bag, it will be clearly understood from Figure 6 that it works equally well with a top gussetted bag (110), the manufacturing of which is well-known to the man of the art. The numerals used in Figure 6 show the same features as described in the previous Figures with like numerals. It will be evident that the embodiments of opening devices illustrated in Figures 4 and 5 can be equally provided on the top gussetted bag (110) shown in Figure 6.

While the preferred embodiment describes a perforated opening device, it is also possible to replace the vertical perforation (25a and 25b) by tear strings made of recyclable material (like paper, cotton strings or a combination). In this case, the size of the internal reinforcement sheet can be reduced to just cover the cutting (37, 137) that generates the loose flap as there are no vertical perforations to protect anymore.

The opening devices shown in the attached figures have a loose flap hinged at the lower edge of the opening device, to be detached with an upward pull. Opening devices where the loose flap is hinged to the upper side of the part to be detached with a downward pull are of course also encompassed by the invention. Furthermore, it may be advantageous to coat part of this loose flap facing the bag with a releasable glue so that it can be repeatedly attached on and detached from the area of the side panel against which it normally lies when the bag is still unopened, thereby allowing partial reclosing of the bag. In that case, the area of the side panel corresponding to the area of the flap that has been provided with a releasable glue, should be suitably treated, like with a recyclable varnish coating.

While the preferred embodiment describes a carrying device with a reinforcement made of a biodegradable and/or recyclable material, it is also possible to position the sewing line defining the limit of the extension in which the grip holeis provided sufficiently close to the upper end of this grip hole, so that possible tearing of this grip hole is stopped by the cotton string used for sewing, thereby eliminating the need for this reinforcement.

Whereas, in the above preferred embodiment, reference is made to cotton string when sewing in specific locations is desired, any other natural material of which string can be made is of course also encompassed. Examples are silk, jute, wool, etc.

While the preferred embodiment describes a side gussetted bag, it is also possible to make a top gussetted bag construction as shown in Figure 6.

Various modifications of the described invention will be apparent to those skilled in the art. Examples of some such variations have been mentioned above. Accordingly, the scope of the present invention should be considered in terms of the following claims and is understood not to be limited to details or structures described and shown in the specification and drawings.

## Claims

1. Package (10, 110) comprising an outer paper bag with an opening device in one of its panels and packed flexible articles (28) wherein said flexible articles are compressed and the outer paper bag is so dimensioned as to keep said articles in compressed form, characterised in that an internal reinforcement sheet of biodegradable and/or recycleable material (24) covers, or partially covers, the opening device (17, 117) on the inside surface facing the packed articles (28).

2. Package according to claim 1 characterised in that the opening device (17, 117) is provided in a side panel (12a, 112a).

3. Package according to claim 2 characterised in that said internal reinforcement sheet comprises a horizontal slit (27) and vertical perforations (25, 29) and that said internal reinforcement sheet extends at least over the entire area of the opening device and beyond the perforations (25, 29), and beyond the horizontal slit (27) defining the area of the opening.

4. Package according to Claim 3, characterized in that two vertical strings made of recyclable material replace the perforations (25a and 25b) and in that the reinforcement sheet of biodegradable and/or recyclable material (24) is provided on the inside surface facing the packed articles (28) between said vertical strings and extends over the cutting area (37, 137) that generates a loose flap (26, 126) so that the bag is perfectly closed.

5. Package according to Claim 2, characterized in that a protective sheet of biodegradable and/or recyclable material (35) is provided on the outside of side panel (12a, 112a) and extends over the entire area of the opening device and covers vertical peforations (25a and 25b) and horizontal perforations (30) defining the area of said opening device.

6. Package according to Claims 2-5, characterized in that said opening device (17, 117) extends into a loose flap (26, 32, 126).

7. Package according to Claim 6, characterized in that said loose flap (26, 32, 126) is coated with a releasable glue on part of its side facing the bag and can be repeatedly attached and detached to the corresponding area of side panel (12a, 112a) against which it normally lies when the bag is still unopened.

8. Package according to any of the preceeding claims, characterized in that a carrying device (16, 116) is provided in an extension (15, 115) of the top panel (13, 113) of said package.

9. Package according to Claim 8, characterized in that said carrying device (16, 116), is reinforced by a layer of biodegradable and/or recyclable material.

10. Package according to Claim 8 and 9, characterized in that a U-shaped biodegradable and/or recyclable protective member (23, 123) is slid over the free top edges of extension (15, 115) and attached by a sewing line (19).

11. Package according to Claim 10, characterized in that said carrying device (16, 116) is located close to said sewing line (19).

## Patentansprüche

1. Verpackung (10, 110), die eine äußere Papiertasche mit einer Öffnungseinrichtung in einer ihrer Wände und verpackte flexible Gegenstände (28) umfaßt, wobei die flexiblen Gegenstände komprimiert und die äußere Papiertasche so dimensioniert ist, daß sie die Gegenstände in komprimierter Form hält, dadurch gekennzeichnet, daß ein inneres Verstärkungsblatt aus biologisch abbaubarem und/oder rezyklierbarem Material (24) die Öffnungseinrichtung (17, 117) auf der den verpackten Gegenständen (28) zugewandten Innenseite überdeckt oder teilweise überdeckt.

2. Verpackung nach Anspruch 1, dadurch gekennzeichnet, daß die Öffnungseinrichtung (17, 117) in einer Seitenwand (12a, 112a) angeordnet ist.

3. Verpackung nach Anspruch 2, dadurch gekennzeichnet, daß das innere Verstärkungsblatt einen horizontalen Schlitz (27) und vertikale Perforationen (25, 29) aufweist, und daß das innere Verstärkungsblatt sich zumindest über den gesamten Bereich der Öffnungseinrichtung und über die Perforationen (25, 29) sowie über den den Öffnungsbereich definierenden horizontalen Schlitz (27) hinauserstreckt.

4. Verpackung nach Anspruch 3, dadurch gekennzeichnet, daß zwei vertikale Fäden aus rezyklierbarem Material die Perforationen (25a und 25b) ersetzen, und daß das Verstärkungsblatt aus biologisch abbaubarem und/oder rezyklierbarem Material (24) auf der den verpackten Gegenständen (28) zugewandten Innenseite zwischen den vertikalen Fäden angeordnet ist und sich über den Schnittbereich (37, 137) erstreckt, welcher eine lose Lasche (26, 126) erzeugt, so daß die Tasche perfekt geschlossen ist.

5. Verpackung nach Anspruch 2, dadurch gekennzeichnet, daß ein Schutzblatt aus biologisch abbaubarem und/oder rezyklierbarem Material (35) auf der Außenseite der Seitenwand (12a, 112a) vorgesehen ist, das sich über den gesamten Bereich der Öffnungseinrichtung erstreckt und die vertikalen Perforationen (25a und 25b) sowie die horizontalen Perforationen (30), welche den Bereich der Öffnungseinrichtung definieren, überdeckt.

6. Verpackung nach den Ansprüchen 2-5, dadurch gekennzeichnet, daß die Öffnungseinrichtung (17, 117) sich in eine lose Lasche (26, 32, 126) erstreckt.

7. Verpackung nach Anspruch 6, dadurch gekennzeichnet, daß die lose Lasche (26, 32, 126) auf einem Teil ihrer der Tasche zugewandten Seite mit einem lösbaren Klebstoff beschichtet ist und wiederholt an dem entsprechenden Bereich der Seitenwand (12a, 112a), an welchem sie normalerweise anliegt, wenn die Tasche noch ungeöffnet ist, befestigt und von diesem wieder gelöst werden kann.

8. Verpackung nach einem der vorhergehenden Ansprüche, dadurch gekennzeichnet, daß eine Trageinrichtung (16, 116) in einer Verlängerung (15, 115) der Deckwand (13, 113) der Verpackung vorgesehen ist.

9. Verpackung nach Anspruch 8, dadurch gekennzeichnet, daß die Trageinrichtung (16, 116) durch eine Lage eines biologisch abbaubaren und/oder rezyklierbaren Materials verstärkt ist.

10. Verpackung nach Anspruch 8 und 9, dadurch gekennzeichnet, daß ein U-förmiges biologisch abbaubares und/oder rezyklierbares Schutzelement (23, 123) über die freien oberen Kanten der Verlängerung (15, 115) geschoben und mit Hilfe einer Naht (19) befestigt ist.

11. Verpackung nach Anspruch 10, dadurch gekennzeichnet, daß die Trageinrichtung (16, 116) nahe der Naht (19) angeordnet ist.

## Revendications

1. Emballage (10, 110) comprenant un sac en papier extérieur avec un dispositif d'ouverture dans l'un de ses panneaux et des articles souples emballés (28), dans lequel lesdits articles souples sont comprimés et le sac en papier extérieur est dimensionné de manière à garder lesdits articles sous une forme comprimée, caractérisé en ce qu'une feuille de renforcement interne d'un matériau biodégradable et/ou recyclable (24) recouvre, ou recouvre en partie, le dispositif d'ouverture (17, 117) sur la surface interne située en regard des articles emballés (28).

2. Emballage selon la revendication 1, caractérisé en ce que le dispositif d'ouverture (17, 117) est ménagé dans un panneau latéral (12a, 112a).

3. Emballage selon la revendication 2, caractérisé en ce que ladite feuille de renforcement interne comprend une fente horizontale (27) et des perforations verticales (25, 29) et en ce que ladite feuille de renforcement interne s'étend au moins sur la surface toute entière du dispositif d'ouverture et au-delà des perforations (25, 29), et au-delà de la fente horizontale (27) en définissant la surface de l'ouverture.

4. Emballage selon la revendication 3, caractérisé en ce que deux cordons verticaux réalisés en un matériau recyclable remplacent les perforations (25a et 25b) et en ce que la feuille de renforcement de matériau biodégradable et/ou recyclable (24) est prévue sur la surface interne située en regard des articles emballés (28) entre lesdits cordons verticaux et s'étend sur la surface de découpage (37, 137), ce qui forme un rabat lâche (26, 126) de telle sorte que le sac est parfaitement fermé.

5. Emballage selon la revendication 2, caractérisé en ce qu'une feuille de protection en matériau biodégradable et/ou recyclable (35) est prévue sur la face extérieure du panneau latéral (12a, 112a) et s'étend sur toute la surface du dispositif d'ouverture et recouvre les perforations verticales (25a et 25b) et les perforations horizontales (30) définissant la surface dudit dispositif d'ouverture.

6. Emballage selon les revendications 2-5, caractérisé en ce que ledit dispositif d'ouverture (17, 117) s'étend dans un rabat lâche (26, 32, 126).

7. Emballage selon la revendication 6, caractérisé en ce que ledit rabat lâche (26, 32, 126) est revêtu d'une colle susceptible d'être dégagée sur la partie de son côté tourné vers le sac et peut être fixé et détaché de façon répétitive à la surface correspondante dudit panneau latéral (12a, 112a) contre lequel il s'étend normalement lorsque le sac n'a pas encore été ouvert.

8. Emballage selon l'une quelconque des revendications précédentes, caractérisé en ce qu'un dispositif de support (16, 116) est prévu dans un prolongement (15, 115) du panneau de dessus (13, 113) dudit emballage.

9. Emballage selon la revendication 8, caractérisé en ce que ledit dispositif de support (16, 116) est renforcé par une couche d'un matériau biodégradable et/ou recyclable.

10. Emballage selon les revendications 8 et 9, caractérisé en ce qu'un élément de protection en forme de U, biodégradable et/ou recyclable (23, 123) est glissé sur les bords de dessus libres du prolongement (15, 115) et fixé par une ligne de couture (19).

11. Emballage selon la revendication 10, caractérisé en ce que ledit dispositif de support (16, 116) est disposé près de ladite ligne de couture (19).
